(19) Europäisches Patentamt
European Patent Office
Office européen des brevets

(11) EP 2 494 638 B1

(12) **FASCICULE DE BREVET EUROPEEN**

(45) Date de publication et mention de la délivrance du brevet:
**04.05.2016 Bulletin 2016/18**

(21) Numéro de dépôt: **10785154.5**

(22) Date de dépôt: **21.10.2010**

(51) Int Cl.:
***H01M 6/18*** *(2006.01)* ***H01M 6/24*** *(2006.01)*
***H01M 10/26*** *(2006.01)* ***H01M 12/06*** *(2006.01)*

(86) Numéro de dépôt international:
**PCT/FR2010/052246**

(87) Numéro de publication internationale:
**WO 2011/051597 (05.05.2011 Gazette 2011/18)**

(54) **MEMBRANE CÉRAMIQUE CONDUCTRICE DE CATIONS ALCALINS**

ALKALISCHE KATIONEN LEITENDE KERAMISCHE MEMBRAN

ALCALINE CATION CONDUCTIVE CERAMIC MEMBRANE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2009 FR 0957528**

(43) Date de publication de la demande:
**05.09.2012 Bulletin 2012/36**

(73) Titulaire: **Electricité de France**
**75008 Paris (FR)**

(72) Inventeurs:
- **TOUSSAINT, Gwenaëlle**
**F-77140 Nemours (FR)**
- **STEVENS, Philippe**
**F-77940 Noisy Rudignon (FR)**

(74) Mandataire: **Cabinet Plasseraud**
**66, rue de la Chaussée d'Antin**
**75440 Paris Cedex 09 (FR)**

(56) Documents cités:
**EP-A1- 1 088 796** **US-A1- 2004 241 520**
**US-A1- 2008 070 087**

- **W.C .WEST, J.F.WHITACRE, J.R.JIM: "Chemical stability enhancement of lithium conducting solid electrolyte plates using sputtered LiPON films", JOURNAL OF POWER SOURCES, vol. 126, 2004, pages 134-138, XP002587467,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 494 638 B1

## Description

La présente invention concerne un dispositif électrochimique, en particulier une batterie rechargeable, comportant à la fois un électrolyte aqueux saturé et une membrane d'électrolyte solide conducteur de cations alcalins, ces deux électrolytes étant séparés l'un de l'autre par un film de polymère organique.

La densité d'énergie massique (exprimée en Wh/kg) des batteries reste la principale limitation pour leur utilisation dans les équipements portables, tels que l'électronique portable ou les véhicules électriques. La limitation énergétique de ces batteries est en grande partie liée aux performances des matériaux qui la composent. Les meilleurs matériaux d'électrode négative actuellement disponibles ont généralement une capacité spécifique comprise entre 300 à 350 Ah/kg. Celle-ci est de l'ordre de 100 à 150 Ah/kg seulement pour les matériaux de l'électrode positive.

L'avantage des systèmes métal-air (lithium-air ou sodium-air) réside dans l'utilisation d'une électrode positive de capacité infinie. L'oxygène consommé à l'électrode positive n'a pas besoin d'être stocké dans l'électrode mais peut être prélevé dans l'air ambiant. La capacité de la batterie dépend alors uniquement de la capacité de l'électrode négative et de la capacité à stocker le produit de la réduction de l'oxygène, c'est-à-dire l'hydroxyde de lithium ou de sodium formé dans le compartiment de l'électrode positive au cours de la décharge de la batterie.

L'électrode à air a besoin d'un milieu aqueux, basique ou acide, pour pouvoir fonctionner de façon optimale. Malheureusement, le lithium métallique ou le sodium métallique utilisé pour l'électrode négative est trop réactif vis-à-vis de l'eau et sa formation en présence d'eau, au cours de la recharge, est impossible car la réduction de l'eau s'opère à des tensions beaucoup plus faibles, empêchant la formation de lithium ou sodium métal. Une barrière physique étanche à l'eau est donc nécessaire entre le compartiment de l'électrode négative à base de lithium ou sodium métal et le compartiment d'électrode positive contenant un électrolyte aqueux. Cette barrière physique étanche à l'eau doit toutefois laisser passer sélectivement les cations métalliques de l'électrolyte aqueux vers l'électrode négative et dans le sens inverse.

On connaît depuis un certain temps sous la dénomination « Li Super Ionic Conductor » (LISICON) ou « Na Super Ionic Conductor » (NASICON), une famille de matériaux céramiques qui répondent à ces exigences. Ces matériaux ont des conductivités avantageusement élevées allant jusqu'à $10^{-4}$ voire $10^{-3}$ S/cm à 25 °C et présentent une bonne stabilité chimique vis-à-vis de l'électrolyte aqueux dans le compartiment d'électrode positive (électrode à air). Toutefois, leur réactivité avec le lithium ou sodium métallique dans le compartiment anodique est très importante et il est indispensable de les isoler de manière connue du lithium ou sodium métallique par un revêtement de protection, par exemple à base d'un verre d'oxynitrure de phosphore et de lithium (LiPON) ou d'oxynitrure de phosphore et de sodium (NaPON).

Les premiers travaux en vue du développement d'une batterie primaire, c'est-à-dire non rechargeable, Li-air datent des années 1970 (US 4 057,675). Ces batteries souffraient d'une autodécharge importante et d'une durée de vie faible due à la corrosion (réaction du lithium avec l'eau). Une batterie de puissance d'environ 1,2 kW, composés de six modules à néanmoins été construite (W.R. Momyer et al. (1980), Proc. 15th Intersoc. Energy Convens. Eng. Conf., page 1480). Une batterie rechargeable $Li/O_2$ sans phase aqueuse, utilisant un électrolyte polymère contenant un sel de lithium, a également été réalisée (K.M. Abraham et al. (1996), J. Electrochem. Soc. 143(1), pages 1 - 5). L'utilisation, dans cette cellule, d'une électrode positive poreuse à base de carbone avait donné de bons résultats en réduction de l'oxygène, mais cette électrode n'était pas adaptée à l'oxydation lors de la recharge. Seuls trois cycles ont pu être mis en oeuvre et à la connaissance de la Demanderesse, aucun autre travail n'a été publié. Enfin, plus récemment, la société PolyPlus a rapporté l'obtention de bonnes performances avec une batterie non rechargeable Li-métal/eau utilisant un séparateur à base de Lisicon (S. J. Visco. et al, (2006), Proc. 210th Meeting of the Electrochem. Soc., page 389).

Comme expliqué ci-dessus, un des facteurs limitant la capacité des batteries rechargeables métal-air est leur capacité à stocker l'hydroxyde de métal alcalin formé, au cours de la décharge de la batterie, par réduction de l'oxygène dans le compartiment d'électrode positive ($O_2 + 4\ e^- + 2H_2O \rightarrow 4\ OH^-$), oxydation du métal alcalin dans le compartiment d'électrode négative ($4\ Li \rightarrow 4\ Li^+ + 4\ e^-$) et migration des ions alcalins ainsi formés vers le compartiment d'électrode positive.

La concentration en hydroxyde de métal alcalin augmente donc dans l'électrolyte aqueux au cours de la décharge de la batterie et diminue au cours de la charge de la batterie lorsque les ions alcalins migrent de nouveau vers le compartiment d'électrode négative pour y être réduits et que les ions hydroxyle sont oxydés au niveau de l'électrode de dégagement d'oxygène (électrode positive fonctionnant pendant la charge de la batterie).

Pour que la batterie ait une capacité massique la plus élevée possible, il est souhaitable de limiter fortement le volume d'électrolyte aqueux et d'utiliser des solutions les plus concentrées possibles. En théorie, rien ne s'oppose à laisser la concentration de l'hydroxyde de métal alcalin atteindre et dépasser la concentration de saturation (5,2 M de LiOH à 20 °C), limite au-delà de laquelle l'hydroxyde de métal alcalin précipite. La formation d'un précipité n'est en principe pas gênant car au moment de la recharge de la batterie celui-ci peut de nouveau se solubiliser et libérer les ions lithium ou de sodium. Le précipité d'hydroxyde de métal alcalin constitue ainsi un réservoir intéressant d'ions lithium ou de sodium.

En pratique, la Demanderesse, dans le cadre de ses recherches visant à mettre au point des batteries métal-air rechargeables toujours plus performantes, a toutefois observé, au moment de la précipitation de l'hydroxyde de métal alcalin dans l'électrolyte aqueux, une augmentation très importante de la résistance cationique du système au niveau de l'interface entre la membrane d'électrolyte solide et l'électrolyte aqueux. Cette chute spectaculaire et fortement indésirable de la conductivité cationique a pu être attribuée à la formation, au niveau de la surface de la membrane d'électrolyte solide, d'une couche cristalline dense d'hydroxyde de métal alcalin (LiOH ou NaOH) qui n'est pas conductrice de cations. Ce problème est particulièrement important et gênant pour l'hydroxyde de lithium qui a une solubilité dans l'eau à 20 °C d'environ 5,2 moles/litre seulement. Il l'est moins pour l'hydroxyde de sodium qui a une solubilité dans l'eau environ cinq fois plus élevée que l'hydroxyde de lithium.

La présente invention est basée sur la découverte que la formation indésirable d'une telle couche de cristallisation dense de LiOH ou, dans une moindre mesure de NaOH, au niveau de l'interface électrolyte solide/électrolyte aqueux peut être totalement empêchée grâce à la présence d'une mince couche d'un polymère organique approprié au niveau de cette interface.

La présente invention a par conséquent pour objet une membrane céramique conductrice de cations alcalins, recouverte, sur au moins une partie d'au moins une de ses surfaces, d'une couche d'un polyélectrolyte organique conducteur de cations, insoluble et chimiquement stable dans l'eau à pH basique, voire très basique, c'est-à-dire supérieur à 14.

La membrane céramique conductrice de cations alcalins est de préférence une membrane céramique conductrice d'ions sodium ou d'ions lithium, de préférence d'ions lithium. De telles membranes céramiques conductrices d'ions métalliques sont connues et sont commercialisées par exemple sous les dénominations *Lithium Ion Conducting Glass Ceramic* (LIC-GC) par la société Ohara Inc., Japon. Il s'agit de céramiques de formule $Li_{1+x}(M, Ga, Al)_x(Ge_{1-y}Ti_y)_{2-x}(PO_4)_3$ où M représente un ou plusieurs métaux choisis parmi Nd, Sm, Eu, Gd, Tb, Dy, Ho, Er, Tm et Yb, et où $0<x \leq 0{,}8$ et $0 \leq y \leq 1{,}0$. Des membranes céramiques de ce type sont également connues dans la littérature sous la dénomination LISICON (*Li Super Ionic Conductor*).

Les céramiques conductrices d'ions sodium sont par exemple des matériaux de formule $Na_{1+x}Zr_2Si_xP_{3-x}O_{12}$ où $0 \leq x \leq 3$.

Ces céramiques conductrices d'ions métalliques sont décrites notamment dans le brevet US 6 485 622 et dans l'article de N. Gasmi et al, J. of Sol-Gel Science and Technology 4(3), 231 - 237, et sont connues dans la littérature sous la dénomination NASICON (*Na Super Ionic Conductor*).

L'épaisseur de la membrane céramique conductrice de cations de métaux alcalins dépend des dimensions de la membrane. Plus la surface de celle-ci est importante, plus la céramique doit être épaisse pour résister aux contraintes mécaniques. Dans des dispositifs électrochimiques, on recherche toutefois généralement à utiliser, dans la mesure du possible, des électrolytes solides de faible épaisseur.

En effet, le rendement électrique d'une pile ou d'une batterie par exemple est en partie gouverné par la résistance de l'électrolyte. Cette résistance spécifique (R) est exprimée par la formule

$$R = (r*e)/A,$$

où *r* désigne la résistivité de l'électrolyte, *e* son épaisseur et *A* sa surface. Autrement dit plus l'épaisseur *A* de l'électrolyte sera faible, meilleur sera le rendement énergétique du dispositif.

La membrane d'électrolyte solide utilisée dans la présente invention a avantageusement une épaisseur comprise entre 30 μm et 500 μm, de préférence entre 50 μm et 160 μm. Pour des surfaces significativement plus grandes que quelques $cm^2$, l'épaisseur de la membrane doit être augmentée en conséquence ou bien la membrane doit être renforcée et soutenue par une structure de renforcement, par exemple des barres ou une grille en résine, collée sur une ou les deux côtés de la membrane et laissant libre la plus grande surface de celle-ci, c'est-à-dire au moins 80 %, de préférence au moins 90 % de la surface de la membrane d'électrolyte solide.

Cette membrane céramique est revêtue, sur au moins une de ses surfaces, d'une couche d'un polymère organique conducteur de cations, insoluble dans l'eau à pH basique et chimiquement stable à pH basique.

On entend dans la présente invention par « polymère organique conducteur de cations » ou par « polyélectrolyte organique conducteur de cations » un polymère comportant plusieurs groupes électrolytes. Lorsqu'un tel polymère est mis en contact avec de l'eau, les groupes électrolytes se dissocient et des charges négatives, associées à des cations (contre-ions), apparaissent sur son squelette. La charge du polymère est dépendante du nombre de groupements électrolytes présents et du pH de la solution.

Un tel polyélectrolyte conducteur de cations a donc une capacité *intrinsèque* de conduction de cations et doit être distingué des électrolytes solides à base de polymères imprégnés de sels, comme par exemple les électrolytes des batteries lithium métal polymère (LMP) qui sont constitués d'un polymère neutre, tel que le poly(oxyde d'éthylène), imprégné de sel de lithium. Ces électrolytes des batteries LMP seraient en effet inappropriés pour l'application envisagée

dans la présente invention car ils sont solubles dans l'eau et chimiquement instables dans des milieux fortement basiques.

De tels polymères organiques conducteurs de cations sont connus et sont utilisés typiquement dans des piles à combustibles de type PEMFC (de l'anglais *polymer electrolyte membrane fuel cell*) ou pour l'électrolyse chlore-soude, où ils sont utilisés en tant qu'électrolyte solide.

On entend dans la présente invention par « polymère stable dans l'eau à pH basique » un polymère qui, lorsqu'il est immergé pendant une semaine dans de l'eau à pH 14 et à 50 °C, ne présente aucune dégradation chimique détectable, ni aucune perte de conductivité ionique.

Comme expliqué ci-dessus, ce polymère insoluble et stable dans l'eau à pH basique, est un polyélectrolyte de type polyacide porteur d'un certain nombre de groupements chargés négativement (anions). Ce sont ces groupements de charges négatives, liés au squelette polymère et associées à des contre-ions cationiques, qui sont en effet responsables de la conductivité cationique de la couche de polymère couvrant la céramique.

Le polymère organique doit avoir une conductivité d'ions $Li^+$ ou de $Na^+$ suffisante, mais n'a pas besoin d'être sélectif vis-à-vis d'un certain type de cations, cette sélectivité étant assurée par la céramique conductrice de cations sous-jacente.

Pour que la conductivité cationique du polymère organique soit suffisante, son poids équivalent (masse molaire moyenne par groupement chargé négativement) doit être suffisamment faible. En effet, plus le poids équivalent est faible, plus la capacité d'échange ionique du polymère sera importante. Il convient généralement de ne pas utiliser des polymères ayant un poids équivalent supérieur à 2000 g/mol, de préférence 1800 g/mol de groupement acide.

Le poids équivalent ne doit toutefois pas être trop faible car une concentration de charges négatives trop importante risquerait de rendre le polymère soluble dans l'eau et l'électrolyte aqueux. Il est toutefois difficile, voire impossible, de définir une limite inférieure pour le poids équivalent du polymère. On comprendra en effet que la limite inférieure de la fourchette de poids équivalent dépendra, entre autres, de la nature chimique du polymère et en particulier du caractère hydrophobe des comonomères non chargés. Un polymère ayant un squelette très hydrophobe reste en effet insoluble dans l'eau pour des poids équivalents inférieurs à ceux de polymères ayant un squelette moins hydrophobe. L'homme du métier n'aura aucun problème pour ajuster le poids équivalent du polymère à une valeur la plus faible possible qui permet toutefois de conserver l'insolubilité dans l'eau. Le poids équivalent du polymère organique est de préférence compris entre 600 et 1800 g/mol, en particulier entre 700 et 1500 g/mol de groupements acides.

Le polymère organique est de préférence un polymère organique halogéné, et l'on préfère tout particulièrement un polymère fluoré. Comme indiqué ci-dessus, ce polymère doit être porteurs de groupes acides. Ces groupes acides peuvent être des acides forts ou faibles, le pH d'utilisation, généralement très élevé, assurant un taux de dissociation suffisant pour les acides faibles.

On peut citer à titre d'exemple particulièrement préféré un copolymère de tétrafluoroéthylène et d'un comonomère porteur d'un groupe acide, de préférence un polymère de formule

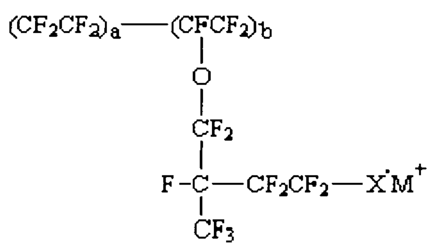

où

X représente un groupe $-COO^-$ ou un groupe $-SO_3^-$, de préférence un groupe $-SO_3^-$, et $M^+$ représente un proton ou un cation métallique.

De tels polymères préférés sont connus et disponibles sur le marché depuis de très nombreuses années sous la dénomination Nafion®. Des dispersions ou solutions de ce polymère peuvent être déposées uniformément sur les membranes céramiques par exemple par pulvérisation, immersion, centrifugation, au rouleau ou au pinceau. Après évaporation de la phase solvant, on soumet la céramique recouverte du polymère de préférence à un traitement thermique, par exemple pendant une heure à environ 150 °C sous air, dans le but de stabiliser la couche de polymère. Après dépôt, le polymère est sous forme protonique. Les protons seront échangés contre des ions $Li^+$ ou $Na^+$ lors de l'immersion dans des solutions d'hydroxyde de lithium ou de sodium.

Pour les copolymères de tétrafluoroéthylène et d'un comonomère acide tels que décrits ci-dessus, le poids équivalent est de préférence compris entre 1000 et 1200 g/mol de groupements acides.

L'épaisseur de la couche de polymère organique après dépôt, séchage et un éventuel traitement thermique est généralement comprise entre 1 et 50 $\mu m$, de préférence comprise entre 2 et 20 $\mu m$, en particulier entre 2 et 10 $\mu m$. La couche de polymère doit être suffisamment épaisse pour être stable et couvrante et empêcher efficacement la

cristallisation de l'hydroxyde de métal alcalin. Des épaisseurs plus importantes, c'est-à-dire supérieures à 50 µm, pourraient certes être envisagées, mais augmenterait indésirablement la résistance de la couche de polymère organique.

Dans un mode de réalisation de la membrane céramique de la présente invention, le polymère organique conducteur de cations, insoluble et chimiquement stable dans l'eau à pH basique ne recouvre qu'une seule des deux surfaces de la membrane céramique et l'autre surface est recouverte d'un revêtement de protection à base de $Li_3N$, $Li_3P$, LiI, LiBr, LiF, oxynitrure de lithium et de phosphore (LiPON) ou à base d'oxynitrure de sodium et de phosphore (NaPON), de préférence un revêtement LiPON ou NaPON. Ce revêtement constitue une protection contre une attaque par le matériaux de l'électrode négative. Une telle structure de type sandwich à trois couches (revêtement de protection/membrane céramique/polymère organique) sera utilisée en particulier dans des piles ou batteries métal-air ou métal-eau où l'électrolyte solide, c'est-à-dire la membrane céramique, doit être isolé du métal alcalin du compartiment d'électrode négative.

La membrane céramique, conductrice de cations alcalins et revêtue d'une couche de polymère organique conducteur de cations, décrite ci-dessus est en principe utile dans tous les dispositifs électrochimiques utilisant un électrolyte solide et un électrolyte liquide aqueux contenant une concentration élevée d'un composé susceptible de cristalliser à la surface de la membrane céramique si celle-ci n'était pas recouverte du polymère.

La présente invention a par conséquent également pour objet un dispositif électrochimique contenant

- en tant qu'électrolyte solide, une membrane céramique conductrice de cations alcalins recouverte d'un polymère organique, insoluble et chimiquement stable dans l'eau à pH basique et conducteur de cations, telle que décrite ci-dessus, et
- en tant qu'électrolyte liquide, une solution aqueuse d'hydroxyde de métal alcalin, en contact avec ledit polymère organique.

Ce dispositif électrochimique est de préférence une batterie rechargeable ou non rechargeable de type métal-air ou métal-eau, de préférence une batterie rechargeable ou non rechargeable de type lithium-air ou lithium-eau.

Une batterie lithium-air selon la présente invention est composée

- d'un compartiment d'électrode négative contenant du lithium métallique,
- d'un compartiment d'électrode positive comprenant au moins une électrode positive à air, immergée dans une solution aqueuse d'hydroxyde de lithium, et
- d'un électrolyte solide séparant de façon étanche aux gaz et liquides le compartiment d'électrode négative du compartiment d'électrode positive, ledit électrolyte solide étant une membrane céramique selon la présente invention recouverte sur une de ses surfaces (celle tournée vers le compartiment d'électrode positive) d'un polymère organique conducteur de cations, insoluble et chimiquement stable dans l'eau à pH basique et, éventuellement si nécessaire, sur l'autre surface (celle tournée vers le compartiment d'électrode négative), d'un revêtement de protection à base de $Li_3N$, $Li_3P$, LiI, LiBr, LiF, ou d'oxynitrure de lithium et de phosphore (LiPON), de préférence d'un revêtement à base de LiPON.

La batterie lithium-air, lorsqu'il s'agit d'une batterie rechargeable, comprend de préférence en outre une électrode positive à dégagement d'oxygène (qui est active pendant la recharge de la batterie), plongée, comme l'électrode à air, dans l'électrolyte aqueux.

Une batterie lithium-eau selon la présente invention diffère d'une batterie lithium-air simplement par le fait que l'électrode à air, active pendant la décharge, est remplacée par une électrode positive de dégagement d'hydrogène, catalysant la réduction de l'eau selon la réaction

$$2H_2O+2e^- \rightarrow H_2 + 2\ OH^-$$

Le dispositif électrochimique de la présente invention peut également être une cellule d'électrolyse comportant un compartiment d'électrode négative et un compartiment d'électrode positive, les deux compartiments (demi-cellules) étant séparés l'un de l'autre par une membrane céramique conductrice de cations alcalins selon l'invention. Une telle cellule d'électrolyse peut servir par exemple à récupérer à partir d'un sel de sodium ou de lithium, de l'hydroxyde de sodium ou de lithium et l'acide correspondant à l'anion dudit sel. Pour cela, une solution aqueuse du sel en question, par exemple du $Li_2SO_4$, est introduite dans le compartiment d'électrode positive et un potentiel est appliqué entre les deux électrodes. A la fin de la réaction d'électrolyse, le compartiment de l'électrode positive contiendra une solution d'acide sulfurique et le compartiment de l'électrode négative contiendra une solution de LiOH et éventuellement un précipité de LiOH. Dans ce mode de réalisation du dispositif de la présente invention, la membrane conductrice de cations alcalins est recouverte du polymère organique au moins sur sa face tournée vers le compartiment d'électrode négative.

Enfin, le dispositif électrochimique peut être une pompe à lithium ou une pompe à sodium, c'est-à-dire un dispositif électrochimique permettant de récupérer et de concentrer sélectivement du lithium, sous forme de LiOH de préférence solide, ou du sodium, sous forme de NaOH de préférence solide, à partir d'une solution aqueuse diluée ou polluée. Une telle pompe à lithium ou à sodium a une structure identique à celle d'une cellule d'électrolyse telle que décrite ci-dessus, mais fonctionne différemment car les solutions introduites dans les compartiments d'électrode négative et positive sont différentes. Une solution diluée ou polluée, contenant le cation alcalin en question, est introduite dans le compartiment d'électrode positive et une tension est appliquée entre les deux électrodes. A la fin de la réaction électrochimique, tous les cations alcalins se trouveront sous forme hydroxyde de métal alcalin (LiOH ou NaOH) dans le compartiment d'électrode négative. Comme pour la cellule d'électrolyse décrite ci-dessus, c'est la surface de la membrane céramique tournée vers le compartiment d'électrode négative où s'accumulera l'hydroxyde de sodium ou de lithium qui devra être recouverte du polymère organique.

La présente invention est illustrée ci-après à l'aide des figures annexées, dans lesquelles

- La figure 1 représente la structure d'une batterie lithium-air selon l'invention et

- La figure 2 montre l'évolution au cours du temps de la tension nécessaire au maintien d'une intensité de courant de 2 mA pendant les essais décrits dans l'exemple ci-après.

Sur la Figure 1, le compartiment d'électrode négative comprend une électrode négative **1** en lithium métal relié à un conducteur électronique **2.** Le compartiment d'électrode positive comprend un électrolyte liquide **3** formé par une solution saturée de LiOH, dans laquelle plongent une électrode à air **4** et une électrode de dégagement d'oxygène **5.** Un précipité de LiOH **6** s'est accumulé au fond du compartiment d'électrode positive. Les deux compartiments sont séparés l'un de l'autre par une membrane céramique **7** recouverte, du côté du compartiment d'électrode négative, par un revêtement de protection **8** à base de LiPON et, du côté du compartiment d'électrode positive, d'une couche de polymère organique **9** insoluble dans l'eau conducteur de cations. Le revêtement **8** sert à isoler la membrane céramique du lithium métallique tandis que la couche de polymère organique **9** a pour fonction de prévenir la formation d'une couche de cristallisation de LiOH à la surface de la membrane céramique **7.**

## Exemple

Pour mettre en évidence l'effet d'une mince couche de polymère organique hydrophobe conducteur de cation à la surface d'une membrane d'électrolyte céramique, on prépare un dispositif électrochimique comprenant deux compartiments séparés l'un de l'autre par une membrane céramique conductrice d'ions $Li^+$ (Lisicon) d'une épaisseur de 300$\mu$m commercialisée par la société Ohara. Les deux compartiments sont remplis d'une solution aqueuse de LiOH 5M. Une électrode de platine est insérée dans chaque compartiment. A l'aide d'un potentiostat, on fait passer un courant de 2 mA à travers la cellule entre les deux électrodes de platine, ce qui entraîne le passage d'ions $Li^+$ du compartiment anodique vers le compartiment cathodique. Le passage d'ions $Li^+$ est accompagné par la formation d'ions $OH^-$ dans le compartiment d'électrode positive par réduction d'eau ou d'oxygène. Le compartiment d'électrode positive de ce dispositif reproduit le fonctionnement du compartiment d'électrode positive d'une batterie lithium-eau ou lithium-air au niveau de l'interface entre la céramique Lisicon et l'électrolyte aqueux contenant du LiOH. Le passage d'un courant de 2 mA est maintenu jusqu'à saturation et précipitation de LiOH et la tension nécessaire pour maintenir un courant de 2 mA est mesurée pendant toute la durée de l'expérience.

Après environ 45 heures de fonctionnement, on observe, au moment du début de la précipitation de LiOH, une augmentation rapide et importante de la tension nécessaire pour le maintien d'une intensité de courant de 2 mA (voir Courbe A de la Figure 2).

Une analyse visuelle de la membrane céramique en Lisicon montre une couche dense de cristaux de LiOH sur la surface exposée à l'électrolyte saturé du compartiment de l'électrode positive.

La même expérience est menée avec une membrane céramique Lisicon identique à la première mais recouverte d'une couche de Nafion® sur la surface exposée au compartiment d'électrode positive.

La Courbe B de la Figure 2 montre l'évolution de la tension nécessaire pour maintenir une intensité de courant de 2 mA. On constate qu'aucune montée en tension n'est observée lors de la précipitation de LiOH dans le compartiment d'électrode positive. On observe bien la formation de cristaux de LiOH dans le compartiment d'électrode positive, mais ces cristaux sédimentent sous forme de précipité et ne se déposent pas à la surface de la couche de Nafion® recouvrant la membrane céramique en Lisicon.

## Revendications

1. Membrane céramique conductrice de cations alcalins recouverte, sur au moins une partie de sa surface, d'une couche d'un polyélectrolyte organique de type polyacides porteurs de groupements chargés négativement, de poids équivalent inférieur à 2000 g/mol, conducteur de cations, insoluble et chimiquement stable dans l'eau à pH basique, la membrane céramique présentant une épaisseur comprise entre 30 μm et 500 μm.

2. Membrane céramique selon la revendication 1, **caractérisée par le fait qu'**il s'agit d'une membrane céramique de formule

$$Li_{1+x}(M, Ga, Al)_x(Ge_{1-y}Ti_y)_{2-x}(PO_4)_3$$

où M est un ou plusieurs métaux choisis parmi Nd, Sm, Eu, Gd, Tb, Dy, Ho, Er, Tm et Yb, et où $0<x \leq 0{,}8$ et $0 \leq y \leq 1{,}0$, ou une membrane céramique de formule

$$Na_{1+x}Zr_2S_xP_{3-x}O_{12}$$

où $0 \leq x \leq 3$.

3. Membrane céramique selon l'une quelconque des revendications précédentes, **caractérisée par le fait qu'**elle a une épaisseur comprise entre 50 μm et 160 μm.

4. Membrane céramique selon l'une quelconque des revendications précédentes, **caractérisé par le fait que** le polymère organique est un polymère organique halogéné, de préférence un polymère fluoré, porteurs de groupes acides.

5. Membrane céramique selon la revendication 4, **caractérisé par le fait que** le polymère organique est un copolymère de tétrafluoroéthylène et d'un comonomère porteur d'un groupe acide, de préférence d'un groupe $-SO_3^-M^+$.

6. Membrane céramique selon l'une quelconque des revendications précédentes, **caractérisé par le fait que** l'épaisseur de la couche de polymère organique est comprise entre 1 et 50 μm, de préférence comprise entre 2 et 10 μm.

7. Membrane céramique selon l'une quelconque des revendications précédentes, **caractérisée par le fait qu'**elle est recouverte sur une de ses surfaces de la couche d'un polymère organique conducteur de cations, insoluble et chimiquement stable dans l'eau à pH basique et sur l'autre surface d'un revêtement de protection à base de $Li_3N$, $Li_3P$, LiI, LiBr, LiF, oxynitrure de lithium et de phosphore (LiPON) ou à base d'oxynitrure de sodium et de phosphore (NaPON), de préférence un revêtement LiPON ou NaPON.

8. Dispositif électrochimique contenant,

   - en tant qu'électrolyte solide, une membrane céramique conductrice de cations alcalins recouverte d'un polymère organique, insoluble et chimiquement stable dans l'eau à pH basique et conducteur de cations, selon l'une quelconque des revendications précédentes, et
   - en tant qu'électrolyte liquide, une solution aqueuse d'hydroxyde de métal alcalin, en contact avec ledit polymère organique.

9. Dispositif électrochimique selon la revendication 8, **caractérisé par le fait qu'**il s'agit d'une batterie métal-air, de préférence d'une batterie lithium-air.

10. Dispositif électrochimique selon la revendication 8, **caractérisé par le fait qu'**il s'agit d'une batterie métal-eau, de préférence d'une batterie lithium-eau.

11. Dispositif électrochimique selon la revendication 8, **caractérisé par le fait qu'**il s'agit d'une cellule d'électrolyse.

12. Dispositif électrochimique selon la revendication 8, **caractérisé par le fait qu'**il s'agit d'une pompe à lithium ou d'une pompe à sodium.

**Patentansprüche**

1. Keramikmembran, die Alkalikationen leitet und auf mindestens einem Teil ihrer Oberfläche von einer Schicht aus einem organischen Polyelektrolyten bedeckt ist, der vom Typ Polysäuren mit negativ geladenen Gruppen ist, ein Äquivalentgewicht von weniger als 2000 g/mol hat, Kationen leitet, in Wasser bei basischem pH-Wert unlöslich und chemisch stabil ist,
wobei die Keramikmembran eine Dicke im Bereich von 30 µm bis 500 µm aufweist.

2. Keramikmembran nach Anspruch 1, **dadurch gekennzeichnet, dass** es sich um eine Keramikmembran der folgenden Formel handelt

$$Li_{1+x}(M, Ga, Al)_x(Ge_{1-y}Ti_y)_{2-x}(PO_4)_3$$

wobei M für ein oder mehrere Metalle steht, die aus Nd, Sm, Eu, Gd, Tb, Dy, Ho, Er, Tm und Yb ausgewählt sind, und wobei $0 < x \leq 0{,}8$ und $0 \leq y \leq 1{,}0$, oder um eine Keramikmembran der folgenden Formel

$$Na_{1+x}Zr_2S_xP_{3-x}O_{12}$$

wobei $0 \leq x \leq 3$.

3. Keramikmembran nach einem beliebigen der vorhergehenden Ansprüche, **dadurch gekennzeichnet, dass** sie eine Dicke im Bereich von 50 µm bis 160 µm hat.

4. Keramikmembran nach einem beliebigen der vorhergehenden Ansprüche, **dadurch gekennzeichnet, dass** es sich bei dem organischen Polymer um ein halogeniertes organisches Polymer handelt, vorzugsweise um ein Fluorpolymer, welches mit Säuregruppen versehen ist.

5. Keramikmembran nach Anspruch 4, **dadurch gekennzeichnet, dass** es sich bei dem organischen Polymer um ein Copolymer aus Tetrafluorethylen und einem Comonomer handelt, das mit einer Säuregruppe versehen ist, vorzugsweise mit einer Gruppe $-SO_3^- M^+$.

6. Keramikmembran nach einem beliebigen der vorhergehenden Ansprüche, **dadurch gekennzeichnet, dass** die Dicke der organischen Polymerschicht im Bereich von 1 bis 50 µm, vorzugsweise im Bereich von 2 bis 10 µm, liegt.

7. Keramikmembran nach einem beliebigen der vorhergehenden Ansprüche, **dadurch gekennzeichnet, dass** sie mit auf einer ihrer Oberflächen von der Schicht aus einem organischen Polymer bedeckt ist, welches Kationen leitet, in Wasser bei basischem pH-Wert unlöslich und chemisch stabil ist, und auf der anderen Oberfläche von einer Schutzbeschichtung auf Grundlage von $Li_3N$, $Li_3P$, LiI, LiBr, LiF, Lithium-Phosphor-Oxynitrid (LiPON) oder auf Grundlage von Natrium-Phosphor-Oxynitrid (NaPON), wobei es sich vorzugsweise um eine LiPON- oder NaPON-Beschichtung handelt.

8. Elektrochemische Vorrichtung, die Folgendes enthält,

   - eine alkalikationenleitende Keramikmembran nach einem beliebigen der vorhergehenden Ansprüche, wobei diese als feststofflicher Elektrolyt dient und von einem organischen Polymer bedeckt ist, das in Wasser bei basischem pH-Wert unlöslich und chemisch stabil ist, wobei es Kationen leitet,
   - eine wässrige Lösung eines Alkalimetallhydroxids, die als flüssiger Elektrolyt dient, wobei sie mit dem organischen Polymer in Kontakt ist.

9. Elektrochemische Vorrichtung nach Anspruch 8, **dadurch gekennzeichnet, dass** es sich um eine Metall-Luft-Batterie handelt, vorzugsweise um eine Lithium-Luft-Batterie.

10. Elektrochemische Vorrichtung nach Anspruch 8, **dadurch gekennzeichnet, dass** es sich um eine Metall-Wasser-Batterie handelt, vorzugsweise um eine Lithium-Wasser-Batterie.

11. Elektrochemische Vorrichtung nach Anspruch 8, **dadurch gekennzeichnet, dass** es sich um eine Elektrolysezelle handelt.

**12.** Elektrochemische Vorrichtung nach Anspruch 8, **dadurch gekennzeichnet, dass** es sich um eine Lithiumpumpe oder um eine Natriumpumpe handelt.

## Claims

**1.** An alkaline-cation conducting ceramic membrane covered, on at least part of its surface, with a layer of an organic polyelectrolyte of the type polyacids bearing negatively charged groups, of an equivalent weight inferior to 2000 g/mol, cations conductor, insoluble and chemically stable in water at basic pH, the ceramic membrane presenting a thickness comprised between 30μm and 500μm.

**2.** The ceramic membrane as claimed in claim 1, **characterized by** the fact it is a ceramic membrane of formula:

$$Li_{1+x}\,(M, Ga, Al)_x\,(Ge_{1-y}Ti_y)_{\,2-x}\,(PO_4)_{\,3},$$

where M is one or more metals chosen from Nd, Sm, Eu, Gd, Tb, Dy, Ho, Er, Tm and Yb, and where $0 < x \leq 0.8$ and $0 \leq y \leq 1.0$, or a ceramic membrane of formula:

$$Na_{1+x}Zr_2S_xP_{3-x}O_{12},$$

where $0 \leq x \leq 3$.

**3.** The ceramic membrane as claimed in any one of the preceding claims, **characterized by** the fact it has a thickness comprised between 30 and 160 μm.

**4.** The ceramic membrane according to any one of the preceding claims, **characterized by** the fact that the organic polymer is a halogenated organic polymer, preferably a fluorinated polymer, bearing acid groups.

**5.** The ceramic membrane according to claim 4, **characterized by** the fact that the organic polymer is a copolymer of tetrafluoroethylene and of a comonomer bearing an acid group, preferably an $-SO_3^-M^+$ group.

**6.** The ceramic membrane according to any one of the preceding claims, **characterized by** the fact that the thickness of the organic polymer layer is comprised between 1 and 50 μm, preferably comprised between 2 and 10 μm.

**7.** The ceramic membrane according to any one of the preceding claims, **characterized by** the fact that it is covered on one of its surfaces with the layer of a cation-conductive organic polymer, insoluble and chemically stable in water at basic pH, and on the other surface with a protective coating based on $Li_3N$, $Li_3P$, LiI, LiBr, LiF or lithium phosphorus oxynitride (LiPON) or based on sodium phosphorus oxynitride (NaPON), preferably a LiPON or NaPON coating.

**8.** An electrochemical device containing:

- as a solid electrolyte, a alkali-cation conducting ceramic membrane covered with an organic polymer, insoluble and chemically stable in water at basic pH and cation-conductive, according to any one of the preceding claims; and
- as a liquid electrolyte, an aqueous solution of alkali-metal hydroxide, in contact with said organic polymer.

**9.** The electrochemical device according to claim 8, **characterized by** the fact that it is a metal-air battery, preferably a lithium-air battery.

**10.** The electrochemical device according to claim 8, **characterized by** the fact that it is a metal-water battery, preferably a lithium-water battery.

**11.** The electrochemical device according to claim 8, **characterized by** the fact that it is an electrolysis cell.

**12.** The electrochemical device according to claim 8, **characterized by** the fact that it is a lithium pump or a sodium pump.

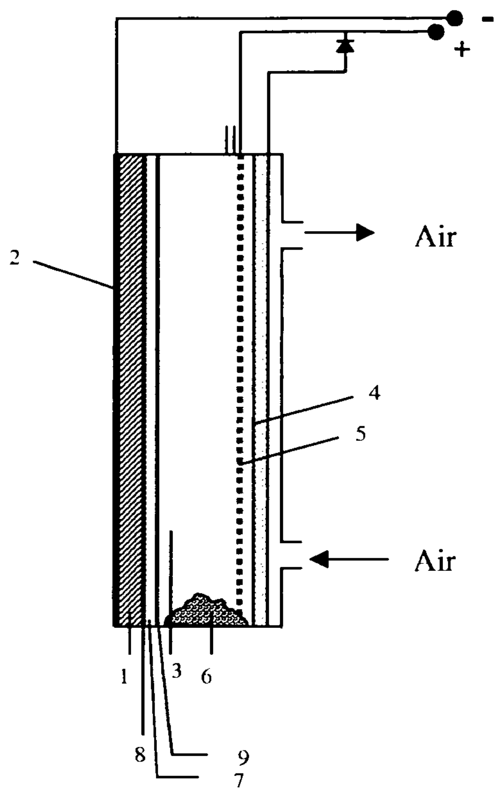


Figure 1

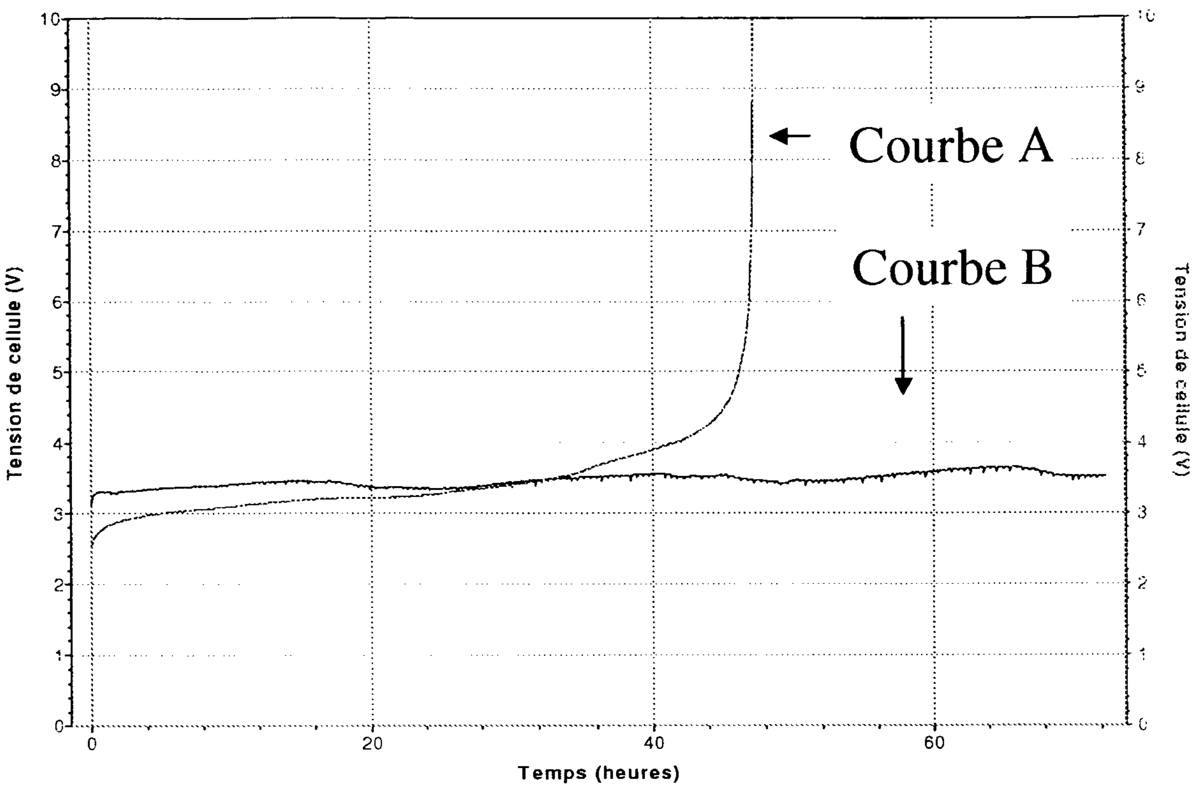
Courbe A
Courbe B
Tension de cellule (V)
Temps (heures)
0
20
40
60
0
1
2
3
4
5
6
7
8
9
10

**Figure 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4057675 A
- US 6485622 B


### Littérature non-brevet citée dans la description


- **W.R. MOMYER et al.** *Proc. 15th Intersoc. Energy Convens. Eng. Conf.,* 1980, 1480
- **K.M. ABRAHAM et al.** *J. Electrochem. Soc.,* 1996, vol. 143 (1), 1-5
- **S. J. VISCO. et al.** *Proc. 210th Meeting of the Electrochem. Soc.,* 2006, 389
- **N. GASMI et al.** *J. of Sol-Gel Science and Technology,* vol. 4 (3), 231-237